# EUROPEAN PATENT SPECIFICATION

(11) **EP 1 457 730 B1**
(45) Date of publication and mention of the grant of the patent: **29.09.2010**
(21) Application number: 04004449.7
(22) Date of filing: 26.02.2004
(51) Int. Cl.: F16P 3/14

(54) **Intruding object monitoring system**
Überwachungsvorrichtung für eindringende Objekte
Dispositif de détection d'intrusion d'objets

(30) Priority: 13.03.2003 JP 2003068794
(43) Date of publication of application: 15.09.2004
(73) Proprietor: OMRON CORPORATION, Kyoto-shi, Kyoto 600-8530 (JP)
(72) Inventor: Sato, Masanori c/o Omron Corporation 801,, Shimogyo-ku Kyoto-shi Kyoto 600-8530 (JP); Ueki, Junichiro c/o Omron Corporation 801,, Shimogyo-ku Kyoto-shi Kyoto 600-8530 (JP); Iida, Toyoo c/o Omron Corporation 801,, Shimogyo-ku Kyoto-shi Kyoto 600-8530 (JP); Akagi, Tetsuya c/o Omron Corporation 801,, Shimogyo-ku Kyoto-shi Kyoto 600-8530 (JP)
(74) Representative: Kilian, Helmut

(56) References cited:
- EP-A2- 1 306 603
- DE-A1- 10 327 388
- US-A- 6 167 143
- US-A1- 2001 041 077
- US-A1- 2003 076 224
- PATENT ABSTRACTS OF JAPAN vol. 018, no. 025 (M-1542), 14 January 1994 (1994-01-14) -& JP 05 261692 A (FUJITSU LTD), 12 October 1993 (1993-10-12)

## Description

### BACKGROUND OF THE INVENTION

### 1. Field of the Invention

The present invention relates to an intruding object monitoring system suitable for securing the safety of workers in a manufacturing scene and more particularly, it relates to an intruding object monitoring system monitoring intrusion or the like of a mobile object such as a person into a dangerous region based on image information obtained by a camera.

### 2. Description of the Prior Art

This kind of intruding object monitoring system is used for securing the safety of workers in a manufacturing scene. As the conventional intruding object monitoring system, the following system is known.

### (1) System focused on existence (intrusion) of a mobile object

According to this intruding object monitoring system, a camera mounted on a ceiling takes an image of a floor and existence of a mobile object is detected by processing the obtained image. Thus, when the object such as a human body intrudes into a dangerous region in which a machine, a robot or the like is set, a signal for generating a warning or stopping the machine is output.

### (2) System focused on direction or speed of mobile object

According to this intruding object monitoring system, an image obtained by the similar method is processed and a mobile object in the image is followed so that its direction and speed are determined. Thus, when the mobile object approaches the machine, the robot or the like or when its approaching speed is high, a signal for generating a warning or stopping the machine is output (referring to Japanese Unexamined Patent Publication No. 5-261692, for example).

However, the conventional intruding object monitoring system has the following problems.

### (1) Common problems between the above two systems

Since the intruding object monitoring systems monitor the mobile object having three-dimensional configuration originally in a two-dimensional image, a vision on the image is varied depending on a position of the mobile obj ect, so that an accurate position cannot be measured in some cases. This problem becomes conspicuous as the object moves away from the center of a viewing field, and that an image is distorted at a peripheral part of a lens, causing positional precision in monitoring the intruding object to deteriorate. In order to solve this problem, although a method of monitoring the obj ect by many cameras mounted on the ceiling is thought, costs are increased in this case so that it is not practical.

### (2) System focused on existence (intrusion) of the mobile object

① In a case where a safety system which stops the machine when a person intrudes into a dangerous region is structured, the machine is stopped even when the person just grazes the region, which causes an operating rate of the machine to be lowered.
② In a case two people move together, they are regarded as one person on the image in some cases. At this time, when one person is not seen by a shielding obj ect in the dangerous region and then another one leaves the dangerous region, it is regarded that there is not any person in the dangerous region and a warning or machine stoppage is canceled in some cases. Consequently, the safety is not secured.

### (3) System focused on direction and speed of mobile object

① Although this intruding object monitoring system is effective for one such as an automatic vehicle having inertia in movement, for the object which moves promptly like a human it is difficult to precisely predict its clash and sufficient safety cannot be secured.
② This intruding object monitoring system determines that the object is dangerous when the object approaches the dangerous source even if it is sufficiently apart from the dangerous source. As a result, the machine is unnecessarily stopped and productivity or a facility operation rate could be lowered.
③ According to this intruding object monitoring system, calculation amount is large in the process of pursuing the mobile object and a processing time is increased in proportion to the number of the mobile objects. Therefore, when the number of the mobile objects in the viewing field is increased, the process is not completed in a desired time, whereby the warning or the machine stoppage is delayed, and some mobile objects could be overlooked. As a result, the safety is not likely to be secured.

An intruding object monitoring system according to the preamble of claim 1 is known from US 2001/041077.

### SUMMARY OF THE INVENTION

The present invention was made in view of the above conventional problems and it is an object of the present invention to provide an intruding object monitoring system which can monitor an intruding object with high reliability with just one camera.

Another object and effect of the present invention is easily understood by the skilled in the art when the following description of the specification is referred.

An intruding object monitoring system according to the present invention is as defined in claim 1.

Here, "the peripheral part of the camera" means that the dangerous source seen in the viewing field of the camera is positioned within a region of 1/3, preferably 1/4 of the whole length of the viewing field from the peripheral part in the vertical and lateral directions, respectively (hereinafter, referred to as a dangerous source settable region). At this time, the whole of the dangerous source is not necessarily seen in the viewing field and only a part of the dangerous source may be positioned at the peripheral part. When the dangerous source is set in the viewing field (the position of the dangerous source is registered in the monitoring system) , the dangerous source may be settable only in the dangerous source settable region and furthermore, the dangerous source may be settable only when it is in contact with the peripheral part of the viewing field.

In such constitution, since the dangerous source is arranged at the peripheral part of the viewing field, the floor just below the camera can be imaged. A configuration of the mobile object can be seen at the place just below the camera most accurately so that intrusion can be precisely detected at this place. When the dangerous source is positioned at the peripheral part of the viewing field, the monitoring region can be largely secured so that the mobile object can be immediately pursued and a dangerous state can be immediately detected. In addition, when the dangerous source is positioned at the peripheral part of the viewing field, the warning region (in which the warning is generated at the time of intrusion) can be easily arranged on the dangerous side from the place just below the camera. In this arrangement, risk of misjudgment in which intrusion is not detected even when the object actually intrudes into the warning region can be lowered. In other words, when the position of the head or the hand of the person which is apart from the floor is viewed as an image, it is seen more apart from the camera center than the actual position. Therefore, in a case where the mounting position of the camera is selected so that the camera center may be positioned in the middle of the dangerous source and the warning region, when the hand is extended in front of the warning region, misjudgment that the hand does not intrude into the warning region is made although the hand actually intrudes into the warning region.

As described above, according to the intruding object monitoring system of the present invention, since the mounting position of the camera is determined so that the dangerous source can be seen at the peripheral part of the viewing field of the camera, the monitoring target region image can be suitable for monitoring the intruding object. In addition, the intruding object can be monitored with higher reliability by employing various information processes for the obtained image information.

According to the present invention, the information processes for monitoring the intruding object performed in the information processing apparatus comprise a process for immediately generating a warning in a case where a mobile obj ect intrudes into a warning region existing in the vicinity of the dangerous source, while for generating a warning only when speed of the mobile object toward the dangerous source exceeds a predetermined value in a case where the mobile object intrudes into a warning target region existing in the vicinity of the warning region.

In this constitution, the warning is generated regardless of the condition when the person is in the region close to the dangerous source in which the person could get into touch with the machine in a prompt action, and the warning is generated depending on the direction and the speed of the object in the region apart from the dangerous source. As a result, the person can be kept safe without lowering an operation rate of the machine. In addition, since the warning region is in the vicinity of the region just below the camera, the intrusion can be precisely detected. In the meantime, since it is mainly intended that the person is previously warned in the warning target region, the precision as well as that in the warning region is not required in the warning target region.

At this time, there is included a process for continuously generating the warning until the mobile object which intruded into the warning region existing in the vicinity of the dangerous source moves out of the warning region, while for holding up the warning when at least one part of the mobile object is lost in sight in the warning region.

According to the above constitution, if the object disappears even when there is no shielding object, malfunction of the intruding object monitoring system is thought to occur, so that safety can be improved in view of fail safe. Alternatively, in a case where there is a shielding object, even when the intruder is recognized as one because two or more people overlap each other and enter the warning region, since the warning is held up when one person hides in the shielding object, there is no error in which the warning is automatically canceled when another person leaves the warning region.

At this time, there can be included a process for allowing a reset of the warning which was held up when at least one part of the mobile object is lost in sight in the warning region, only by a manual resetting operation. In this constitution, since the reset is input after a person checked the scene, even when a person is not seen by the shielding object, safety can be secured.

According to another preferred embodiment of the present invention, the information processes for monitoring the intruding object performed in the information processing apparatus may comprise a process for immediately generating the warning and then holding up the warning when the mobile obj ects whose number is more than a predetermined value intrude into the monitoring target region. When many mobile objects exist in the monitoring target region, since it takes time to pursue the objects, it is thought that some objects could be overlooked and the intruding object monitoring system malfunctions. However, in this constitution, since the warning is held up when the mobile objects whose number exceeds the predetermined value intrude into the monitoring target region, the above problem can be avoided. Since the fact that many people exist in a limited space of a manufacturing scene is the problem itself in view of safety, this function is effective in this respect.

### BRIEF DESCRIPTION OF THE DRAWINGS

Fig. 1 shows a view of a system constitution according to the present invention.
Fig. 2 shows explanatory diagrams showing a relation between a camera and a dangerous source.
Fig. 3 shows an operation explanatory diagram in a camera position according to the present invention.
Fig. 4 shows explanatory diagrams of a software constitution (a first embodiment) of a system according to the present invention.
Fig. 5 shows detailed flowcharts for an essential part of the software constitution (the first embodiment).
Fig. 6 shows explanatory diagrams of a software constitution (a second embodiment) of a system according to the present invention.
Fig. 7 shows detailed flowcharts for an essential part of the software constitution (the second embodiment).
Fig. 8 shows explanatory diagrams of a software constitution (a further preferred embodiment) of a system according to the present invention.
Fig. 9 shows a detailed flowchart of a warning process in the software constitution (the further preferred embodiment).
Fig. 10 shows explanatory diagrams of a software constitution (another preferred embodiment) of a system according to the present invention.
Fig. 11 shows detailed flowcharts for an essential part of the software constitution (the other preferred embodiment).
Fig. 12 shows explanatory diagrams of a software constitution of another system.
Fig. 13 shows detailed flowcharts for an essential part of the software constitution.
Fig. 14 shows explanatory diagrams of a software constitution of another system.
Fig. 15 shows a detailed flowchart for an essential part of a mobile object arithmetic process of the software constitution.

### DESCRIPTION OF THE PREFERRED EMBODIMENTS

An intruding object monitoring system according to a preferred embodiment of the present invention is described with reference to the accompanying drawings, hereinafter. In addition, it is needless to say that the embodiment to be described hereinafter is only a part of the present invention and the scope of the present invention is defined by the claims.

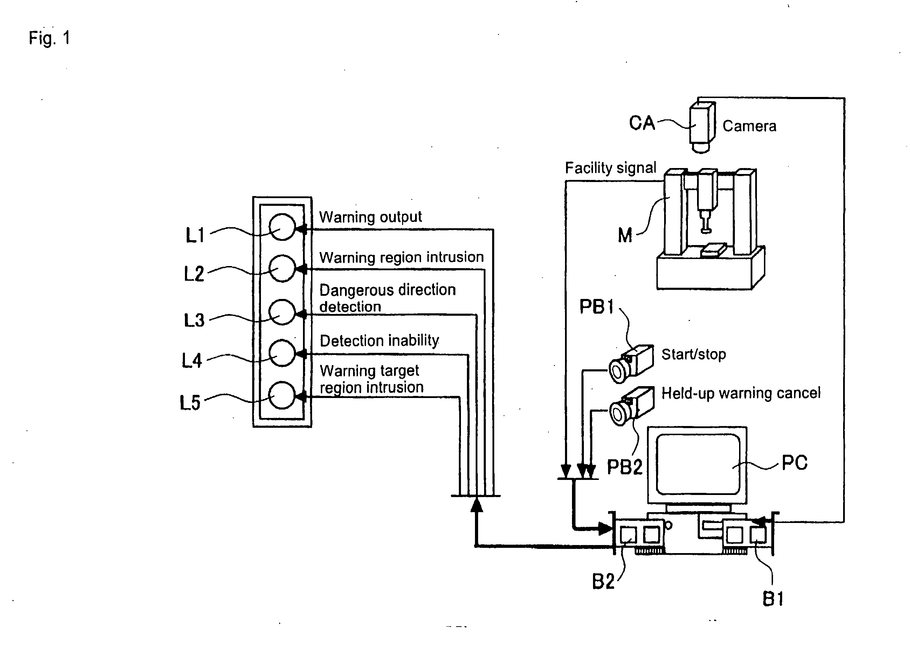

Fig. 1 shows a view of a hardware system constitution according to the present invention. Referring to Fig. 1, reference character CA designates a camera (a video camera incorporating a CCD, a still camera or the like) which is an imaging device, reference character PC designates a personal computer which is an information processing apparatus, reference character B1 designates a board mounted on a personal computer PC to acquire an image, reference character B2 designates a board for inputting and outputting a control signal, reference character M designates a dangerous source such as a large-size machine, reference character PB1 designates a push button switch for start and stop, reference character PB2 designates a push button switch for canceling held-up warning.

Image information is input from the camera CA to the image acquiring board B1. To the signal input/output board B2, a facility signal from the dangerous source M, a start/stop signal from the push button switch PB1 and a held-up warning canceling signal from the push button switch PB2 are input. In addition, from the signal input/output board B2, a warning output signal for turning on a lamp L1, a warning region intrusion output signal for turning on a lamp L2, a dangerous direction detection output signal for turning on a lamp L3, a detection inability output signal for turning on a lamp L4 and a warning target region intrusion output signal for turning on a lamp L5 and the like are output to the outside.

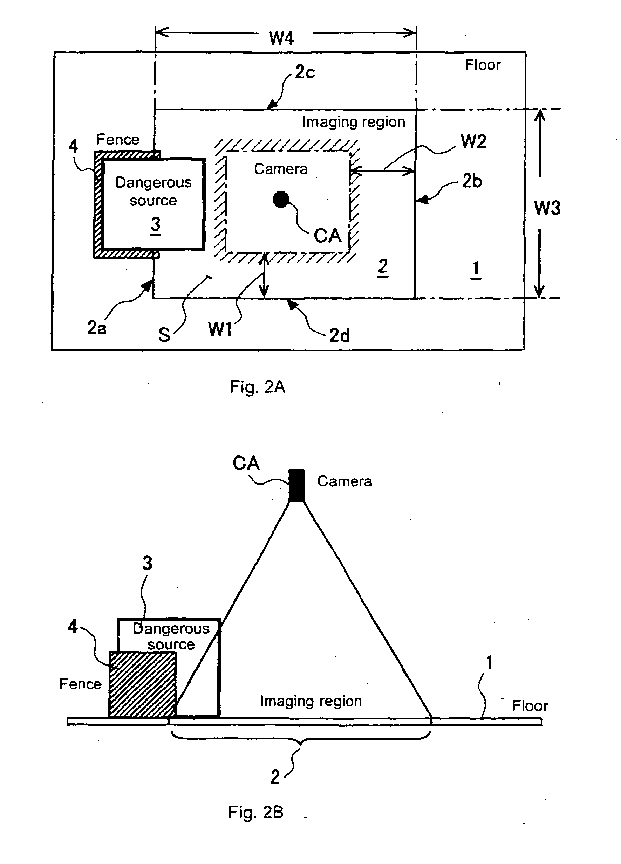

Fig. 2 shows explanatory diagrams showing a relation between the camera and the dangerous source in which Fig. 2A shows a top view and Fig. 2B shows a side view. Referring to Fig. 2A and 2B, reference numeral 1 designates a floor, reference numeral 2 designates an imaging region (a viewing field of the camera), reference numeral 3 designates a dangerous source and reference numeral 4 designates a fence surrounding a right and left faces and back face of the dangerous source.

As can be clear from those drawings, the camera CA is mounted just above the monitoring target region. In other words, the camera CA is mounted at a place from which it can directly look down the monitoring target region. The camera CA has a rectangular imaging region (viewing field) 2. This imaging region (viewing field) 2 has a rectangular outline. The rectangular outline comprises a pair of short sides 2a and 2b and a pair of long sides 2c and 2d. A certain region S (a region designated by hatching in Fig. 2) on the inner periphery side of the pairs of short sides 2a and 2b and long sides 2c and 2d corresponds to a term, that is, "a peripheral part of the viewing field" in the present invention. In this example, the dangerous source 3 is arranged in the peripheral part S on the short side 2a of the imaging region (viewing field) 2 of the camera CA. Since the dangerous source 3 is surrounded by the fence 4 on the right and left sides and the back side, an intruding object can enter from the front side facing the camera CA. Namely, when a person approaches the dangerous source 3, the person surely moves away from the camera CA.

Here, a width (W1) of the peripheral part S in the vertical direction is shown by that (1/4) × W3 ≤ W1 < (1/3) × W3. In addition, a width (W2) of the peripheral part S in the lateral direction is showy by that (1/4) × W4 ≤ W1 < (1/3) × W4. The dangerous source 3 can be registered to the monitoring system only in this peripheral part S. That is, when the designated dangerous source pixel does not coincide with the pixel corresponding to the peripheral part S at the time of registering of the dangerous source 3, that registration is refused.

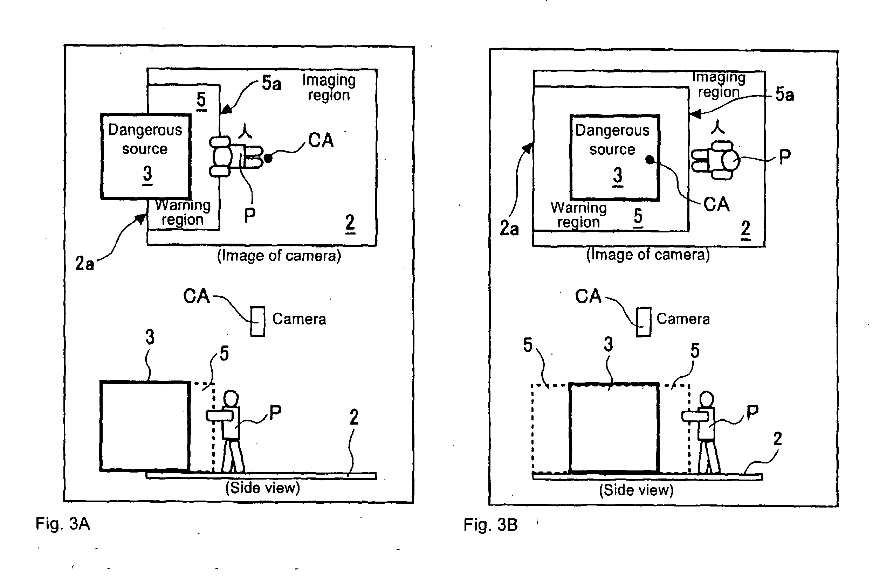

Fig. 3 shows an explanatory diagram of an operation in a camera position according to the present invention, in which Fig. 3A shows a case of a system of the present invention and Fig. 3B shows a case of the conventional system. As shown in Fig. 3B, in the case of the conventional system, a dangerous source 3 is positioned just below the camera CA and the movement of a person P approaching the dangerous source 3 corresponds to the movement of the person P approaching the camera CA at the same time. In addition, referring to Fig. 3, reference numeral 2 designates an imaging region (a viewing field of the camera) , reference numeral 3 designates the dangerous source, and reference numeral 5 designates a warning region. According to the camera position in the conventional system, even when the person P stretches the arm forward and the arm intrudes into the warning region 5, the arm of the person P is regarded as not intruding into the warning region 5 in the image of the camera and the warning is not generated.

In the meantime, according to the case of the system of the present invention shown in Fig. 3A, the dangerous source 3 exists in a position apart from a position just below the camera CA and the movement of the person P approaching the dangerous source 3 corresponds to the movement of the person P moving away from the camera CA. In this constitution, when the person P stretches the arm forward and the arm intrudes into the warning region 5, the arm of the person P is regarded as intruding into the warning region 5 in the image of the camera and the warning is surely generated.

Thus, according to the present invention, since the dangerous source 3 is positioned on the peripheral part 2a of the imaging region (viewing field) 2 of the camera CA, the floor just below the camera CA is enabled by arranging the dangerous source 3 in the peripheral part S of the viewing field. Accordingly, a configuration of a mobile object can be most precisely seen in the place just below the camera CA and the intrusion can be accurately detected in this place. In addition, the monitoring region can be largely acquired by arranging the dangerous source 3 in the peripheral part 2a of the imaging region (viewing field) 2. Consequently, a dangerous state can be immediately detected by immediately detecting the mobile object (the person P) . Furthermore, the warning region (in which the warning is generated by the intrusion) 5 can be easily arranged on the dangerous side from the place just below the camera CA by arranging the dangerous source 3 in the peripheral part S of the imaging region (viewing field) 2. In this arrangement, unlike the case of the conventional system shown in Fig. 3B, risk of misjudgment in which even when the intrusion into the warning region 5 actually occurs, the intrusion is not detected can be reduced.

Since the mobile object approaches the dangerous source 3 can be precisely reflected in the image in the monitoring target region obtained from such camera position, when an information process for monitoring the intruding object is performed based on the thus obtained image in the monitoring target region, an intruding object monitoring system having extremely high reliability can be implemented.

Referring to the concrete information process for the image information obtained by the camera CA, an easy-to-use intruding object monitoring function can be implemented by employing various kinds of software constitutions.

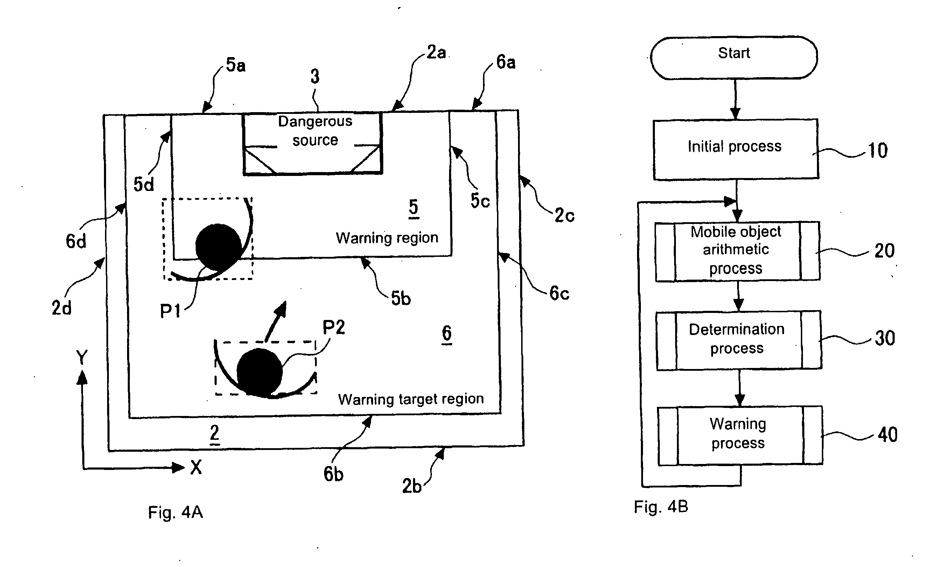

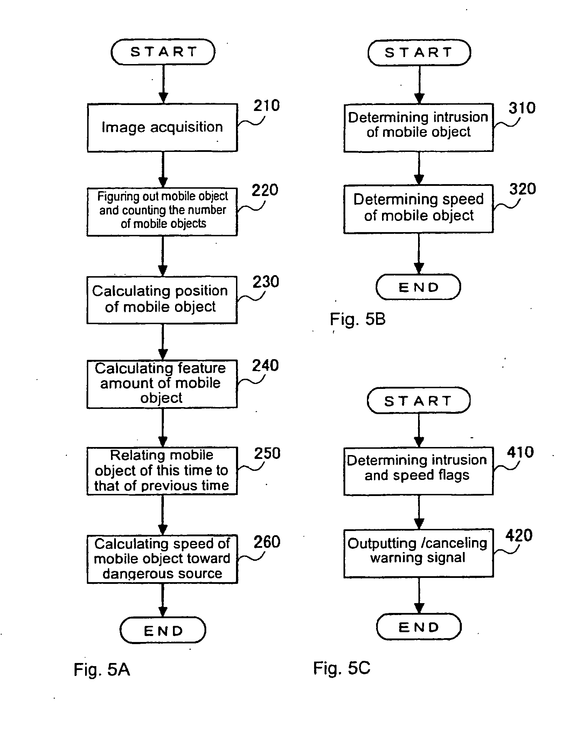

Fig. 4 shows explanatory diagrams of a software constitution (a first embodiment) of a system according to the present invention, and Fig. 5 shows a flowchart showing an essential part of the software constitution (the first embodiment) in detail.

According to an operation explanatory diagram shown in Fig. 4A, reference numeral 2 designates an imaging region, reference characters 2a to 2d designate an outline of the imaging region 2, reference numeral 3 designates a dangerous source, reference numeral 5 designates a warning region, reference characters 5a to 5d designate an outline of the warning region, reference numeral 6 designates a warning target region, reference character P1 designates a person intruding into the warning region 5, and reference character P2 designates a person moving'toward the dangerous source 3 in the warning target region. According to this example, when the mobile object intrudes into the warning region 5 in the periphery of the dangerous source 3, the warning is immediately generated and when the mobile object intrudes into the warning target region 6 in the periphery of the warning region 5, the warning is generated only when the speed of the mobile object toward the dangerous source exceeds a predetermined value.

Next, the software constitution for implementing the above-described intruding object monitoring function is described with reference to Fig. 4B and Fig. 5. The software shown in the general flowchart in Fig. 4B is carried out by the personal computer PC shown in Fig. 1 and includes an initial process (at step 10) , a mobile object arithmetic process (at step 20) , a determination process (at step 30) , and a warning process (at step 40) .

In the initial process (at step 10), a process for obtaining an initial image for a background difference process, a process for clearing various kinds of flags and the like are performed. In the next mobile object arithmetic process (at step 20), a process for detecting the mobile object and calculating its number, a process for calculating the position of each mobile object, a process for calculating the speed of each mobile object toward the dangerous source and the like are performed. In the next determination process (at step 30) , a process for setting an intrusion flag at "1" when the mobile object is in the predetermined region, a process for setting a speed flag at "1" when the speed toward the dangerous source exceeds the predetermined value and the like are performed. In the next warning process (at step 40), a process for confirming the intrusion flag and the speed flag and outputting the warning signal when at least one of the flags is set at "1", and not outputting the warning signal when the flags are all at "0" are performed.

Fig. 5A shows a detail of the mobile object arithmetic process (at step 20) . Referring to Fig. 5A, the current image is acquired at step 210. At the next step 220, the mobile obj ect is figured out by a background difference method and its number is counted. At the next step 230, the position of the mobile object is calculated. For example, coordinates at four corners of a rectangle surrounding the mobile object (referred to as a mobile object region hereinafter) are found. At the next step 240, a feature amount of the mobile object is calculated from its color, area, configuration and the like. For example, a RGB value of a pixel extracted as the mobile object, an aspect ratio of the mobile object region and the like are found. At the next step 250, the same ones are related to each other between the mobile object found by the mobile object arithmetic process at this time and the mobile object found by the mobile object arithmetic process at the previous time. When there is a mobile object which has the similar feature amount at the previous time, in the vicinity of the mobile object at this time, that mobile object is regarded as the same one. When the mobile object does not similar to any one, that mobile object is regarded as a new one. At the next step 260, a moving amount toward the dangerous source (in the Y direction in the drawing) is found based on the related result and the speed is calculated. At this time, the speed of the new mobile object is set at "0".

Fig. 5B shows a detail of the determination process (at step 30) . Referring to Fig. 5B, at step 310, it is determined whether any mobile object is in the predetermined region (the warning region) or not and when it is, the intrusion flag set for each mobile object is set at "1". The intrusion is determined when any one of coordinates at the four corners of the mobile object region is within the predetermined region, for example. At the next step 320, it is determined whether the speed of each mobile object toward the dangerous source exceeds the predetermine value or not and when it exceeds the value, the speed flag set for each mobile object is set at "1" . The threshold value of the speed determination is set at 2m/s, for example.

Fig. 5C shows a detail of the warning process (at step 40). At step 410, OR (logical sum) of all of the intrusion flags and the speed flags are calculated. At the next step 420, when the result of the flag determination by the OR is "1", the warning signal is output and when it is "0", the warning signal is canceled.

As the result of execution of the processes in Fig 4B and Fig. 5A to 5C, when the person of the mobile obj ect intrudes into the warning region 5, the predetermined warning is immediately generated. In addition, when the person of the mobile object intrudes into the warning target region 6, the warning is generated only when the person moves at the speed more than a certain value toward the dangerous source 3. Meanwhile, the warning is canceled when the person moves out of the warning region or the direction and the speed of the person in the warning target region does not exceed the predetermined value.

Thus, the warning is generated regardless of the condition when the person is in the region 5 close to the dangerous source 3 in which the person could get into touch with the machine in a prompt action, and the warning is generated depending on the direction and the speed in the region 6 apart from the dangerous source 3. As a result, the person can be kept safe without lowering an operation rate of the machine. In addition, since the warning region 5 is in the vicinity of the region just below the camera CA, the intrusion can be precisely detected. In the meantime, since it is mainly intended that the person is previously warned in the warning target region 6, the precision as well as that in the warning region 5 is not required in the warning target region 6.

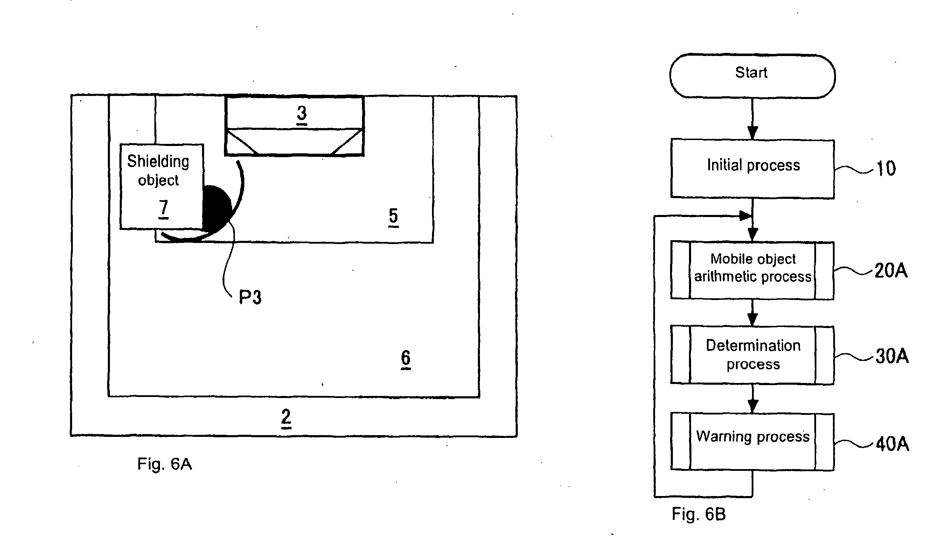

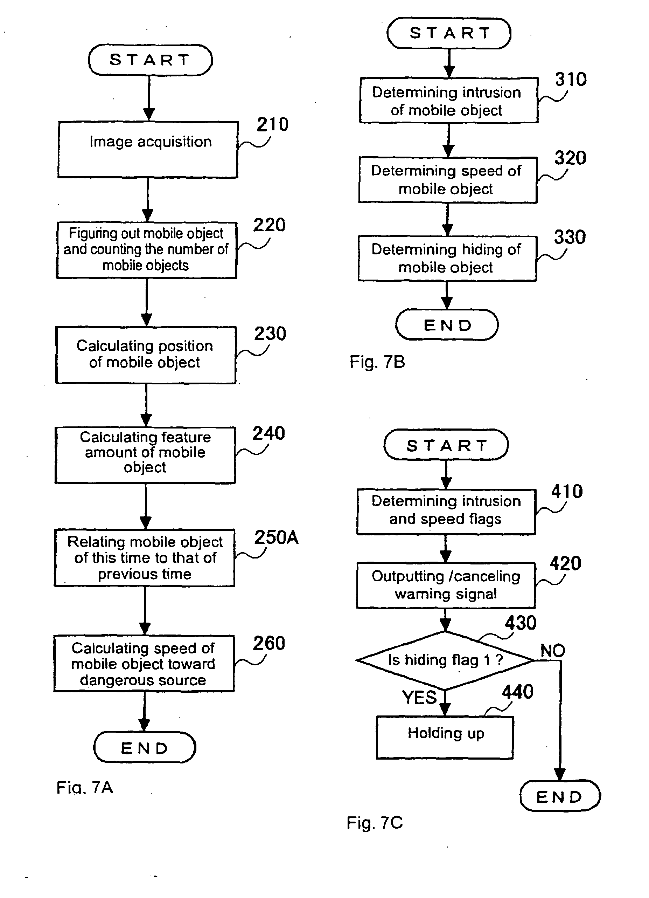

Fig. 6 shows explanatory diagrams of a software constitution (a second embodiment) of a system according to the present invention, and Fig. 7 shows a flowchart showing an essential part of the software constitution (the second embodiment) in detail.

Referring to an operation explanatory diagram in Fig. 6A, reference numeral 2 designates an imaging region, reference numeral 3 designates a dangerous source, reference numeral 5 designates a warning region, reference numeral 6 designates a warning target region, reference numeral 7 designates a shielding object, reference character P3 designates a person (mobile object). In this example, when all or a part of the object is lost in sight in the warning region 5, a warning is held up.

Fig. 6B shows a general flowchart showing processes for implementing such intruding object monitoring function. Processes shown in this general flowchart comprises an initial process (at step 10), a mobile object arithmetic process (at step 20A) , a determination process (at step 30A) , and a warning process (step 40A). In addition, among the above processes, the same constituted part as in the process of the general flowchart in Fig. 4B is allotted to the same reference sign and its description is omitted.

In the mobile object arithmetic process (at step 20A), in addition to the mobile object arithmetic process (at step 20), a process for detecting hiding is added. In the next determination process (at step 30A) , in addition to the content of the determination process (at step 30) shown in Fig. 4B, a process for setting a hiding flag at "1" when the mobile object is hiding in the warning region is added. In the next warning process (step 40A) , in addition to the content of the warning process (step 40) shown in Fig. 4B, a process for holding up the warning when the hiding flag is "1" is added.

Fig. 7A shows a detail of the mobile object arithmetic process (at step 20A). Referring to Fig. 7A, the same constituted part as in the process shown in Fig. 5A is allotted to the same reference sign and its description is omitted. At step 250A, in addition to the content at step 250 shown in Fig. 5A, a process for regarding the previous mobile object which does not correspond to any one of the mobile object at this time as being hiding is added.

Fig. 7B shows a detail of the determination process (at step 30A). As can be clear from comparison between Fig. 7B and Fig. 5B, a process at step 330 is added. At step 330, when the mobile object is determined to be hiding in the mobile object arithmetic process and its previous position is in the predetermined region (warning region) , the hiding flag set for each mobile object is set at "1". In addition, when it is determined to be hiding but its previous position is in the vicinity of the outside of the viewing field, the mobile obj ect is regarded as moved out of the viewing field and the process is not especially performed.

Fig. 7C shows a detail of the warning process (at step 40A) . As can be clear from comparison between Fig. 7C and Fig. 5C, step 430 and step 440 are added. In other words, in this example, when the hiding flag is "1", the process is suspended (the warning is held up).

In this constitution, since the function for holding up the warning when all or a part of the object is lost in sight is added in the intruding object monitoring system which keeps warning until the object leaves the warning region 5, if the object disappears even when there is no shielding object, malfunction of the intruding object monitoring system is thought to occur, so that safety can be improved in view of fail safe. Alternatively, in a case where there is a shielding object, even when the intruder is recognized as one because two or more people overlap each other and enter the warning region, since the warning is held up when one person hides in the shielding object, there is no error in which the warning is automatically canceled when another person leaves the warning region.

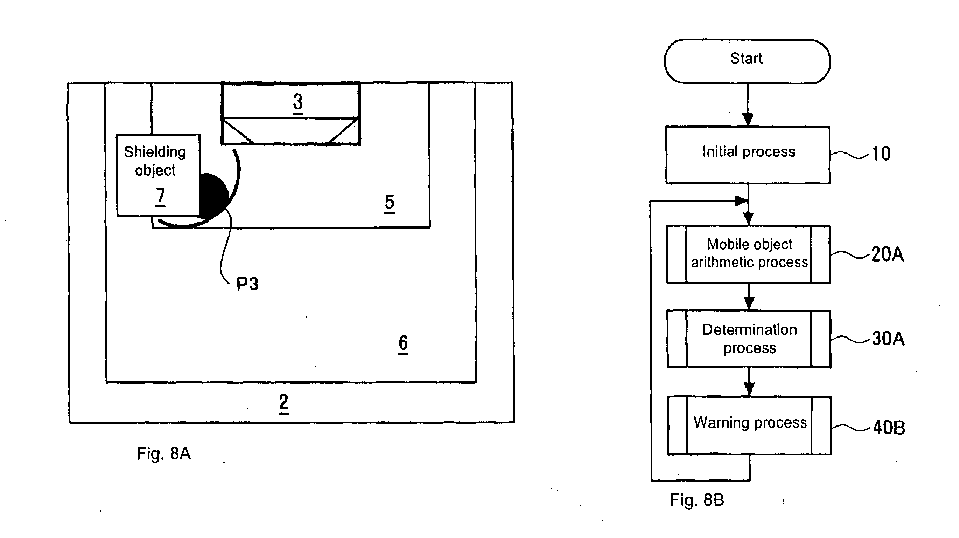

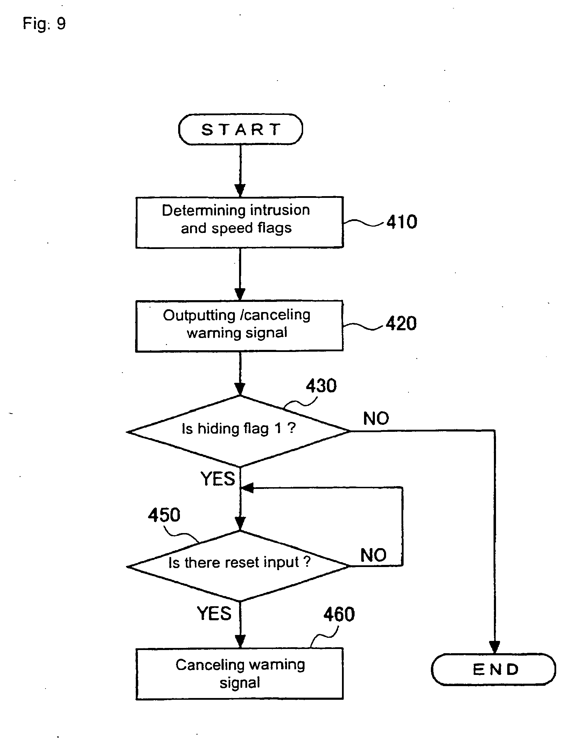

Fig. 8 shows explanatory diagrams of a software constitution (a further preferred embodiment) of a system according to the present invention and Fig. 9 shows a flowchart showing the warning process of the software constitution (the third embodiment) in detail. In this example, while a warning is held up when all or a part of an object is lost in sight in a warning region 5, the warning can be canceled only by a reset operation from the outside.

Fig. 8B shows a general flowchart showing processes for implementing such intruding object monitoring function. In addition, in the flowchart shown in Fig. 8B, the same constituted part as in the flowcharts shown in Fig. 4B and Fig. 6B is allotted to the same reference sign and its description is omitted.

Referring to Fig. 8B, in a warning process (at step 40B) , in addition to the content of the warning process (at step 40A) in Fig. 6B, a process for canceling the warning when a reset is input is added.

Fig. 9 shows a detailed flowchart of the warning process (at step 40B) in the software constitution (the further preferred embodiment) . In Fig. 9, the same constituted part as in Fig. 7C is allotted to the same reference sign and its description is omitted. Referring to Fig. 9, at step 450, it is determined whether the reset is input or not. When the reset is input (YES at step 450) , the operation proceeds to a warning signal canceling process (at step 460). In the warning signal canceling process (at step 460) , a warning signal is canceled.

In this constitution, since the warning is canceled only by the reset input from the outside after a person checked the scene, even when a person is not seen by the shielding object, safety can be secured.

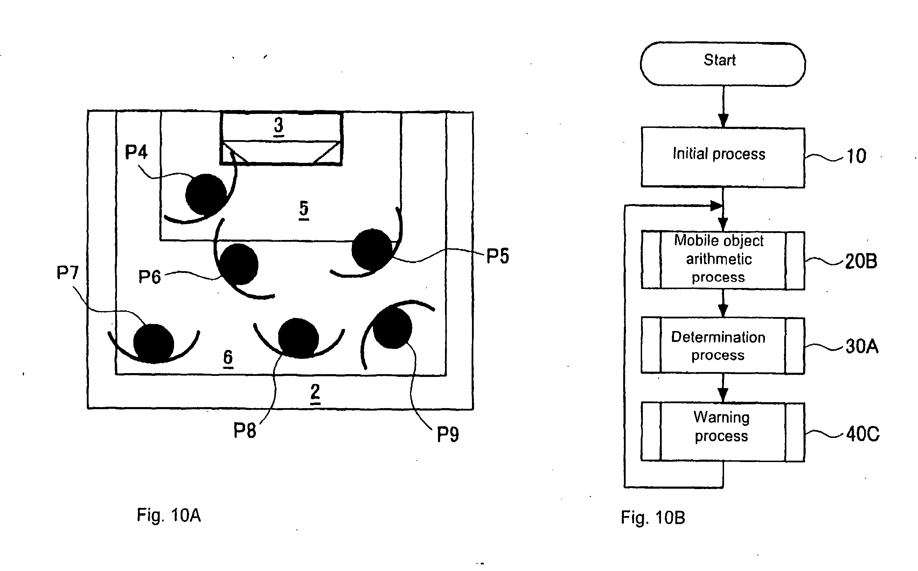

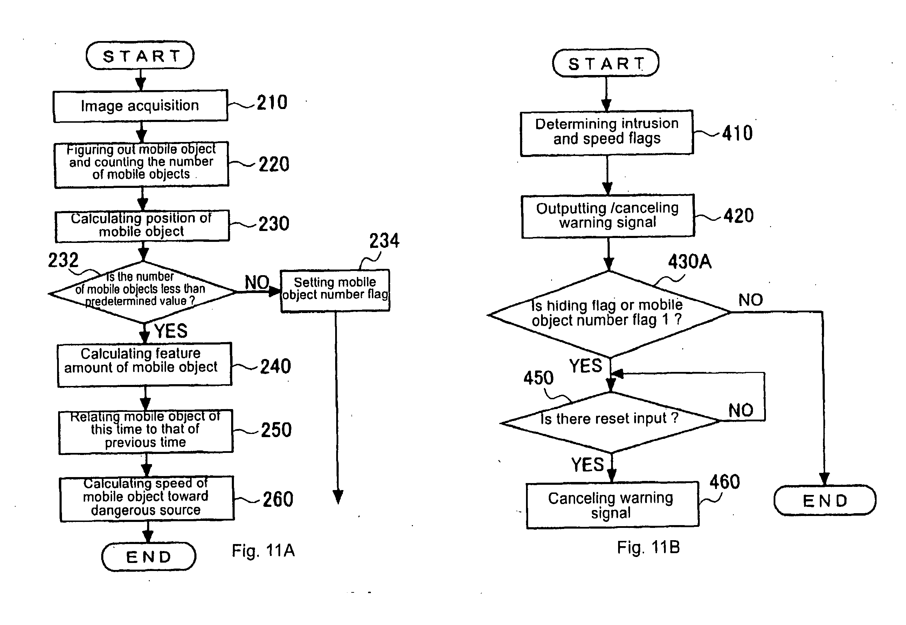

Fig. 10 shows explanatory diagrams of a software constitution (another preferred embodiment) of a system according to the present invention and Fig. 11 shows a flowchart showing an essential part of the software constitution (this preferred embodiment) in detail. In this example, a warning is held up when the objects whose number exceeds a predetermined value intrude into a monitoring target region 2. In addition, according to an operation explanatory diagram in Fig. 10A, reference numeral 2 designates a monitoring target region (a viewing field of a camera) , reference numeral 3 designates a dangerous source, reference numeral 5 designates a warning region, reference numeral 6 designates a warning target region and reference characters P4 to P9 designate people constituting the mobile objects.

Fig. 10B shows a general flowchart of processes for implementing such intruding object monitoring function. In addition, in Fig. 10B, the same constituted part as in the general flowcharts shown in Fig. 4A and Fig. 6B is allotted to the same reference sign and its description is omitted.

Referring to Fig. 10B, in a mobile object arithmetic process (at step 20B) , in addition to the content in the mobile object arithmetic process (at step 20A) shown in Fig. 6B, a process for setting a mobile object number flag at "1" when the number of the mobile objects is more than a predetermined value is added. In addition, in a warning process (at step 40C), the content in the warning process (at step 40B) shown in Fig. 8B is changed such that the warning is held up when the mobile object number flag is "1".

Fig. 11A shows a detail of the mobile object arithmetic process (at step 20B). In addition, in Fig. 11A, the same constituted part as in the process shown in Fig. 7A is allotted the same reference sign and its description is omitted. Referring to Fig. 11A, when the number of the mobile objects is more than the predetermined value, the mobile object number flag is set at "1" (at step 234).

Fig. 11B shows a detail of the warning process (at step 40C) . In addition, in Fig. 11B, the same constituted part as in the process shown in Fig. 9 is allotted the same reference sign and its description is omitted. Referring to Fig. 11B, at step 430A, it is determined whether the hiding flag or the mobile object number flag is "1" or not. When the hiding flag or the mobile object number flag is "1", the operation proceeds to reset waiting (a warning is held up).

When many mobile objects exist in the monitoring target region, since it takes time to pursue the objects, it is thought that the object could be overlooked and the intruding object monitoring system malfunctions. However, in this constitution, since the warning is held up when the mobile objects whose number exceeds the predetermined value intrude into the monitoring target region, the above problem can be avoided. Since the fact that many people exist in a limited space of a manufacturing scene is the problem itself in view of safety, this function is effective in this respect.

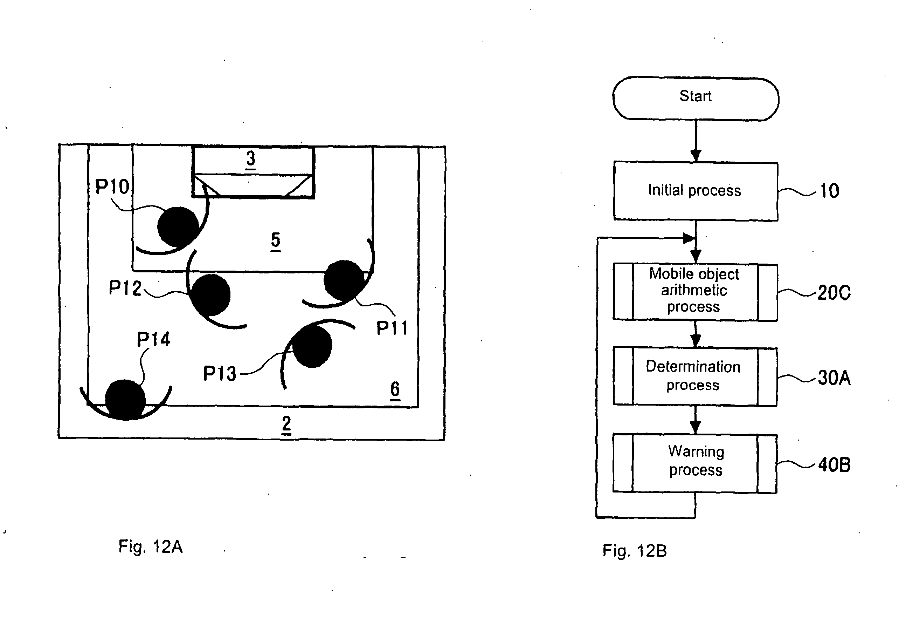

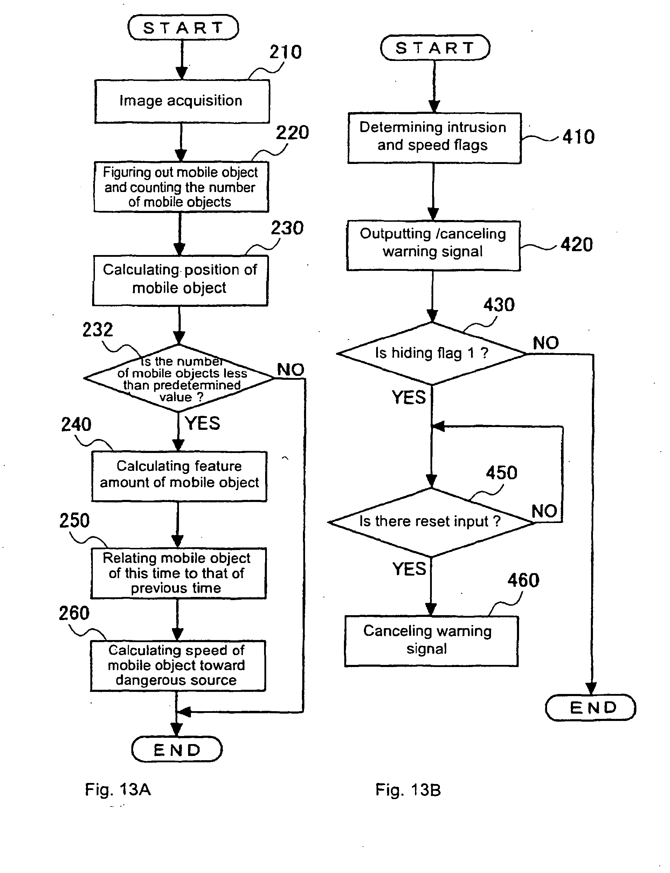

Fig. 12 shows explanatory diagrams of a software constitution of another system, and Fig. 13 shows a flowchart showing an essential part of the software constitution in detail. In this example, when objects whose number is more than a predetermined value intrude into a warning region 5 and a warning target region 6, monitoring is continued only in the warning region 5. In addition, referring to an operation explanatory diagram of Fig. 12A, reference numeral 2 designates a monitoring target region (a viewing field of a camera) , reference numeral 3 designates a dangerous source, reference numeral 5 designates a warning region, reference numeral 6 designates a warning target region and reference signs P10 to P14 designate people constituting the mobile object.

Fig. 12B shows a general flowchart showing processes for implementing such intruding object monitoring function. In addition, in Fig. 12B, the same constituted part as in the process in Fig. 10B is allotted to the same sign and its description is omitted.

Referring to Fig. 12, in a mobile object arithmetic process (at step 20C), the content of the mobile object arithmetic process (at step 20B) in Fig. 10B is changed to a content in which when the number of the mobile object is more than the predetermined value, following processes are skipped. In addition, a content of the warning process (at step 40B) is the same as that of the warning process (at step 40B) in Fig. 8B.

Fig. 13A shows a detail of the mobile object arithmetic process (at step 20C). Referring to Fig. 13A, at step 232, when the number of mobile objects is more than a predetermined value, following process (at steps 240 to 260) are skipped.

Fig. 13B shows a detail of the warning process (at step 40B). Referring to Fig. 13B, at step 430, when a hiding flag is "1", the operation proceeds to reset waiting (at step 450) .

In this constitution, when the objects whose number is more than the predetermined value intrude into the warning region 5 and the warning target region 6, since the monitoring is continued only in the warning region 5, the function (processing time or recognition precision) of the intruding object monitoring system can be maintained in the process of the warning region only, so that the essential function as the system can be maintained.

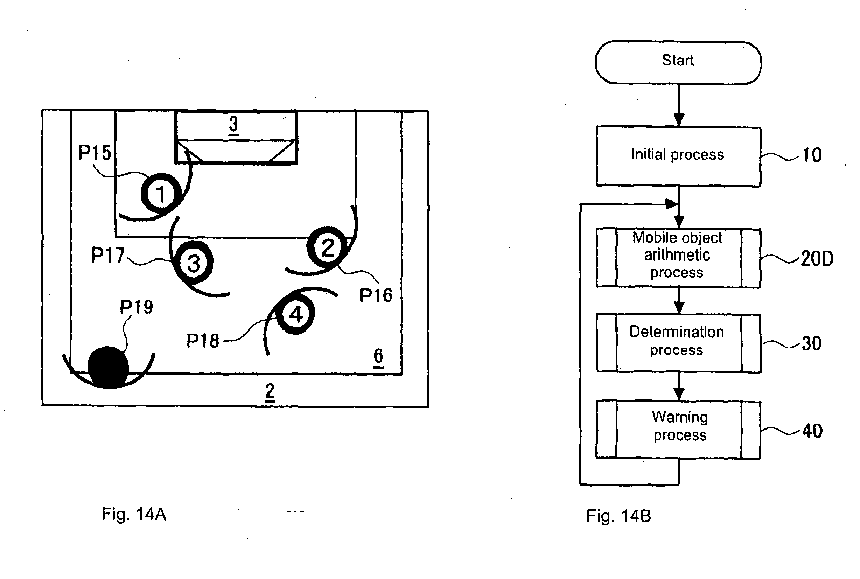

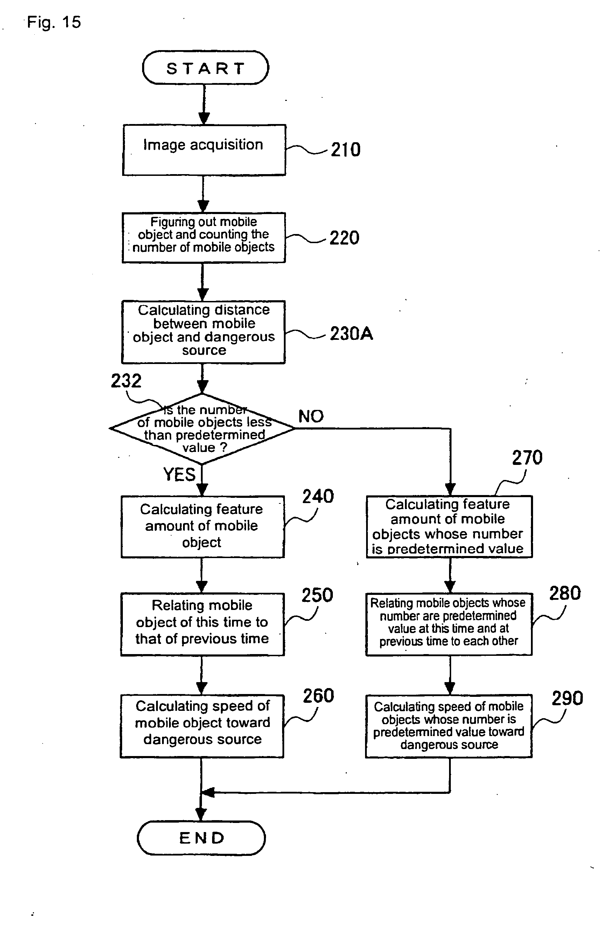

Fig. 14 shows explanatory diagrams of a software constitution of another system, and Fig. 15 shows flowcharts showing an essential part of the mobile object arithmetic process of the software constitution in detail. In this example, when objects whose number is more than the predetermined value intrudes, objects whose number is less than the predetermined value and which are closer to a dangerous source are monitored (including direction and speed). Referring to an operation explanatory diagram of Fig. 14A, reference numeral 2 designates a monitoring target region (a viewing field of a camera), reference numeral 3 designates a dangerous source, reference numeral 5 designates a warning region, reference numeral 6 designates a warning target region and reference character P15 designates a mobile object closest to the dangerous source 3, reference character P16 designates a mobile object secondly closest to the dangerous source 3, reference character 17 designates a mobile object thirdly closest to the dangerous source 3, reference character P18 designates a mobile object fourthly closest to the dangerous source 3 and reference character P19 designates a mobile obj ect farthest from dangerous source 3.

Fig. 14B shows a general flowchart showing processes for implementing such intruding object monitoring function. In addition, in Fig. 14B, the same constituted part as in the process in Fig. 4B is allotted to the same sign and its description is omitted.

Referring to Fig. 14B, in a mobile object arithmetic process (at step 20D), to the content of the mobile object arithmetic process (at step 20C) in Fig. 12B, a function of processing only the mobile object whose number is within the predetermined value and which are closer the dangerous source is added when the number of the mobile objects is more than the predetermined value.

Fig. 15 shows a detail of the mobile object arithmetic process (at step 20D) in Fig. 14B. In addition, in Fig. 15, the same constituted part as in the process in Fig. 13A is allotted to the same sign and its description is omitted.

Referring to Fig. 15, at step 230A, a process is performed for calculating a distance between each object and the dangerous source, from a central coordinate of the dangerous source and a gravity point coordinate of the mobile object. At step 270, a process is performed for calculating feature amounts of the mobile obj ects whose number is the predetermined value, which are selected in increasing order of the distance. Here, the calculation of the feature amount is the same as the content at step 240 shown in Fig. 5A. At the next step 280, a process is performed for relating the mobile objects whose number is the predetermined value, which are selected in increasing order of the distance to each other. In addition, this method is the same as the content at step 250 shown in Fig. 5A. At the next step 290, the speed of the mobile objects whose number is the predetermined value, which are selected in increasing order of the distance, toward the dangerous source is calculated. The calculation of the speed is the same as the content at step 260 shown in Fig. 5A.

In such constitution, when the objects whose number is more than the predetermined value intrude, since the objects whose number is within the predetermined value and which are closer to the dangerous source are monitored (including the direction and the speed), the function (processing time or recognition precision) of the intruding object monitoring system can be maintained in only the process of monitoring the objects whose number is within the predetermined value.

As can be clear from the above description, according to the present invention, the intruding obj ect can be monitored with high reliability with only one camera.

## Claims

1. An intruding object monitoring system comprising:
a camera (CA) mounted on a position so as to look down a monitoring target region (2) including a dangerous source (3); and
an information processing apparatus performing information processes for monitoring an intruding object based on a monitoring target region image taken by the camera (CA),
wherein a mounting position of the camera (CA) is determined so that the dangerous source (3) is shown at a peripheral part (S) of a viewing field of the camera (CA), **characterized in that**
the information processes for monitoring the intruding object performed in the information processing apparatus comprise a process for immediately generating a warning in a case where a mobile object intrudes into a warning region (5) existing in the vicinity of the dangerous source (3), while for generating a warning only when the speed of the mobile object toward the dangerous source (3) exceeds a predetermined value in a case where the mobile object intrudes into the warning target region (6) existing in the vicinity of the warning region (5),
wherein the information processes for monitoring the intruding object performed in the information processing apparatus comprise a process for continuously generating the warning until the mobile object which intruded into the warning region (5) existing in the vicinity of the dangerous source (3) moves out of the warning region (5), while for holding up the warning when at least one part of the mobile object is lost in sight in the warning region (5).

2. The intruding object monitoring system according to claim 1, wherein the information processes for monitoring the intruding object performed in the information processing apparatus comprise a process for allowing a reset of the warning which was held up when at least one part of the mobile object is lost in sight in the warning region (5), only by a manual resetting operation.

3. The intruding object monitoring system according to claim 1, wherein the information processes for monitoring the intruding object performed in the information processing apparatus comprise a process for immediately generating the warning and then holding up the warning when the mobile objects whose number is more than a predetermined value intrude into the monitoring target region (2).

## Patentansprüche

1. Überwachungssystem für eindringende Objekte, welches aufweist:
eine Kamera (CA), die an einer Stelle angebracht ist, dass sie einen Überwachungszielbereich (2), der eine Gefahrenquelle (3) enthält, herunterblickt; und
eine Informationsverarbeitungsvorrichtung, die Informationsverarbeitungen zur Überwachung eines eindringenden Objekts beruhend auf einem mit der Kamera (CA) aufgenommenen Überwachungszielbereichsbild durchführt,
wobei eine Anbringungsposition der Kamera (CA) so bestimmt wird, dass die Gefahrenquelle (3) in einem Randteil (S) eines Gesichtsfelds der Kamera (CA) dargestellt wird, **dadurch gekennzeichnet, dass**
die in der Informationsverarbeitungsvorrichtung durchgeführten Informationsverarbeitungen zur Überwachung des eindringenden Objekts einen Vorgang der sofortigen Erzeugung einer Warnung in einem Fall, in dem ein ortsveränderliches Objekt in einen in der Nachbarschaft der Gefahrenquelle (3) vorliegenden Warnbereich (5) eindringt, und zur Erzeugung einer Warnung nur, wenn die Geschwindigkeit des ortsverändertichen Objekts zur Gefahrenquelle (3) hin einen bestimmten Wert überschreitet, in einem Fall, in dem das ortsveränderliche Objekt in den in der Nachbarschaft des Warnbereichs (5) vorliegenden Warnzielbereich (6) eindringt,
wobei die in der Informationsverarbeitungsvorrichtung durchgeführten Informationsverarbeitungen zur Überwachung des eindringenden Objekts einen Vorgang für ein kontinuierliches Erzeugen der Warnung, bis sich das ortsveränderliche Objekt, das in den in der Nachbarschaft der Gefahrenquelle (3) vorliegenden Warnbereich (5) eingedrungen ist, aus dem Warnbereich (5) herausbewegt hat, und für ein Anhalten der Warnung, wenn wenigstens ein Teil des ortsveränderlichen Objekts im Warnbereich (5) nicht mehr zu sehen ist.

2. Überwachungssystem für eindringende Objekte nach Anspruch 1, wobei die in der Informationsverarbeitungsvorrichtung durchgeführte Informationsverarbeitungen zur Überwachung des eindringenden Objekts einen Vorgang umfassen, mit dem eine Rücksetzung der Warnung, die angehalten worden ist, als wenigstens ein Teil des ortsveränderlichen Objekts im Warnbereich (5) nicht mehr zu sehen ist, allein durch einen manuellen Rücksetzvorgang möglich ist.

3. Überwachungssystem für eindringende Objekte nach Anspruch 1, wobei die in der Informationsverarbeitungsvorrichtung durchgeführten Informationsverarbeitungen zur Überwachung des eindringenden Objekts einen Vorgang für ein sofortiges Erzeugen der Warnung und ein nachfolgendes Anhalten der Warnung, wenn ortsveränderliche Objekte, deren Anzahl größer als ein bestimmter Wert ist, in den Überwachungszielbereich (2) eindringen, umfassen.

## Revendications

1. Système de détection d'intrusion d'objet comprenant :
■ une caméra (CA) montrée à une position de manière à regarder vers le bas une région cible de surveillance (2) comprenant une source dangereuse (3) ; et
■ un dispositif de traitement d'informations effectuant des traitements d'informations pour détecter une intrusion d'objet sur la base d'une image de région cible de surveillance prise par la caméra (CA),
dans lequel une position de montage de la caméra (CA) est déterminée de sorte que la source dangereuse (3) soit montrée dans une partie périphérique (S) d'un champ de vison de la caméra (CA), **caractérisé en ce que**
les traitements d'informations pour détecter l'intrusion d'objet effectués dans le dispositif de traitement d'informations comprennent un processus pour générer immédiatement un avertissement dans un cas dans lequel un objet mobile s'introduit dans une région d'avertissement (5) existant à proximité de la source dangereuse (3), tout en générant un avertissement uniquement lorsque la vitesse de l'objet mobile vers la source dangereuse (3) dépasse une valeur prédéterminée dans un cas dans lequel l'objet mobile s'introduit dans la région crible d'avertissement (6) existant à proximité de la région d'avertissement (5),
dans lequel les traitements d'informations pour détecter l'intrusion d'objet effectués dans le dispositif de traitement d'informations comprennent un processus pour générer continûment l'avertissement jusqu'à ce que l'objet mobile qui s'est introduit dans la région d'avertissement (5) existant à proximité de la source dangereuse (3) se déplace hors de la région d'avertissement (5), tout arrêtant l'avertissement lorsqu'au moins une partie de l'objet mobile est perdue de vue dans la région d'avertissement (5).

2. Système de détection d'intrusion d'objet salon la revendication 1, dans lequel les traitements d'informations pour détecter l'intrusion d'objet effectués dans le dispositif de traitement d'informations comprennent un processus pour permettre une réinitialisation de l'avertissement qui a été arrêté lorsqu'au moines une partie de l'objet mobile a été perdue de vue dans la région d'avertissement (5) uniquement par une opération de réinitialisation manuelle.

3. Système de détection d'intrusion d'objet selon la revendication 1, dans lequel les traitements d'informations pour détecter l'intrusion d'objet effectués dans le dispositif de traitement d'informations comprennent un processus pour générer immédiatement l'avertissement et arrêter ensuite l'avertissement lorsque les objets mobiles dont le nombre est supérieur à une valeur prédéterminée s'introduisent dans la région cible de surveillance (2).
